# EUROPÄISCHE PATENTSCHRIFT

(11) **EP 1 089 053 B1**
(45) Veröffentlichungstag und Bekanntmachung des Hinweises auf die Patenterteilung: **28.05.2008**
(21) Anmeldenummer: 00119735.9
(22) Anmeldetag: 09.09.2000
(51) Int. Cl.: G01D 5/36, B23Q 17/22, G01B 11/26

(54) **Winkelmesseinrichtung und Verwendung dieser Winkelmesseinrichtung in einer Spindelanordnung**
Angle measuring arrangement and its application in a spindle arrangement
Dispositif de mesure d'un angle et son application à un arrangement de broche

(30) Priorität: 21.09.1999 DE 19945099
(43) Veröffentlichungstag der Anmeldung: 04.04.2001
(73) Patentinhaber: Dr. Johannes Heidenhain GmbH, 83292 Traunreut (DE)
(72) Erfinder: Tondorf, Sebastian, 83329 Waging am See (DE); Holzapfel, Wolfgang, 83119 Obing (DE)

(56) Entgegenhaltungen:
- EP-A- 0 413 180
- DE-A- 2 126 164
- US-A- 5 506 579

## Beschreibung

Die Erfindung betrifft eine Winkelmeßeinrichtung zur Messung der Position eines ersten Objektes gegenüber einem zweiten Objekt gemäß dem Oberbegriff des Patentanspruchs 1.

Die Erfindung betrifft weiterhin die Verwendung dieser Winkelmeßeinrichtung in einer Spindelanordnung gemäß dem Oberbegriff des Patentanspruchs 9.

EP-A-0 413 180 beschreibt einen optischen Winkelgeber mit einem drehbar angeordneten Teilungsträger sowie einer stationär angeordneten Abtastplatte und einer stationär angeordneten Detektoranordnung zur Messung der Drehlage des Teilungsträgers gegenüber der Abtastplatte.

Zur Durchführung verschiedener Fertigungsverfahren sind Werkzeugköpfe bekannt, in denen über einen Verstellmechanismus das Werkzeug radial verstellbar gelagert ist. Diese Verstellung erfolgt entweder mittels radial verschiebbarer Schieber, an denen das Werkzeug befestigt ist oder durch einen exzentrisch zur Spindelachse im Werkzeugkopf verdrehbar gelagerten Werkzeugträgern, wobei sich die radiale Lage des am Werkzeugträger befestigten Werkzeugs in Bezug auf die Spindelachse durch Verdrehen des Werkzeugträgers in der exzentrischen Bohrung des Werkzeugkopfs verändert.

Zum numerisch gesteuerten Einstellen der radialen Lage des Werkzeugs ist in beiden Fällen eine exakte Positionsmessung erforderlich.

Bei den Werkzeugköpfen mit integrierten Schiebern erfolgt die Positionsmessung mittels Wegmeßeinrichtungen, indem der Maßstab am Schieber und die Abtasteinheit am Werkzeugkopf befestigt ist. Eine derartige Einrichtung ist in der DE 43 14 295 A1 beschrieben. Diese direkte Positionsmessung garantiert eine präzise Erfassung der radialen Lage des Werkzeugs. Gemäß der DE 43 14 295 A1 werden die Positionsmeßwerte mittels Infrarotlicht oder induktiv vom rotierenden Werkzeugkopf zum stationären Maschinenteil bzw. zur NC-Steuerung übertragen. Außer dem eigentlichen Meßsystem sind hierzu noch separate Übertragungseinheiten erforderlich, welche die Anordnung verteuern, baulich vergrößern und störanfällig machen. Dieser Nachteil wurde bei der Vorrichtung gemäß der DE 35 26 712 gelöst, indem zur direkten Positionsmessung ein lichtelektrisches inkrementales Meßsystem mit einem Maßstab und einer Abtastplatte im Werkzeugkopf integriert ist und die Detektoreinheit zur Erfassung der positionsabhängig modulierten Lichtsignale im stationären Maschinenteil angeordnet ist.

Bei den Werkzeugköpfen mit einem exzentrisch zur Spindelachse verdrehbar gelagerten Werkzeugträger gemäß der DE 22 43 734 A und der DE 21 26 164 A sind ausschließlich indirekte Meßverfahren bekannt. Dabei wird die Verdrehung des Werkzeugträgers über die Antriebsmittel erfaßt. Diese indirekte Messung ist fehlerhaft, da Übersetzungsfehler und das Spiel der dazwischengeschalteten Übertragungselemente (Getriebe) in die Messung mit eingehen.

Aufgabe der Erfindung ist es daher, eine Winkelmeßeinrichtung anzugeben, mit der die Winkellage eines ersten Teils relativ zu einem zweiten Teil detektierbar ist, wobei das erste Teil exzentrisch im zweiten Teil verdrehbar gelagert ist und das zweite Teil in einem stationären Teil drehbar gelagert ist.

Diese Aufgabe wird durch eine Winkelmeßeinrichtung mit den Merkmalen des Patentanspruchs 1 gelöst.

Eine weitere Aufgabe der Erfindung ist es, eine Spindelanordnung mit einer Winkelmeßeinrichtung anzugeben, bei der eine direkte Winkelmessung eines in einem Kopf exzentrisch drehbar gelagerten Werkstück- oder Werkzeughalters vorgesehen ist, wobei der Kopf in einem stationären Teil der Spindel drehbar gelagert ist.

Diese Aufgabe wird durch eine Spindelanordnung mit dem Merkmalen des Patentanspruchs 9 gelöst.

Vorteilhafte Ausführungen der Erfindung sind in den abhängigen Ansprüchen angegeben.

Die besonderen Vorteile der Erfindung liegen darin, daß die Detektoranordnung stationär angeordnet werden kann und somit eine direkte Winkelmessung an exzentrisch zueinander verdrehbaren Teilen störsicher und präzise realisierbar ist.

Nachfolgend wird die Erfindung anhand in den Zeichnungen dargestellter Ausführungsbeispiele näher erläutert.

Es zeigt
- Figur 1: einen Längsschnitt durch eine Spindelanordnung mit einer ersten Winkelmeßeinrichtung,
- Figur 2: einen Querschnitt II-II gemäß Figur 1,
- Figur 3: den Querschnitt II-II bei einer Verdrehung des Werkzeugträgers gegenüber der Darstellung gemäß Figur 2,
- Figur 4: den Querschnitt II-II bei einer Verdrehung der Spindel gegenüber der Darstellung gemäß Figur 2,
- Figur 5: eine vergrößerte Darstellung der Abtastplatte,
- Figur 6: einen Ausschnitt der Spindelanordnung mit einer zweiten Winkelmeßeinrichtung,
- Figur 7: einen Ausschnitt der Spindelanordnung mit einer dritten Winkelmeßeinrichtung im Längsschnitt,
- Figur 8: einen Querschnitt VIII-VIII gemäß Figur 7,
- Figur 9: den Querschnitt VIII-VIII bei einer Verdrehung des Werkzeugträgers gegenüber der Darstellung gemäß Figur 8,
- Figur 10: den Querschnitt VIII-VIII bei einer Verdrehung der Spindel gegenüber der Darstellung gemäß Figur 8,
- Figur 11: eine vergrößerte Darstellung einer Abtastplatte,
- Figur 12: einen Ausschnitt der Spindelanordnung mit einer vierten Winkelmeßeinrichtung im Längsschnitt,
- Figur 13: einen Längsschnitt der Spindelanordnung mit einer fünften Winkelmeßeinrichtung und
- Figur 14: einen Querschnitt XIV-XIV gemäß Figur 13.

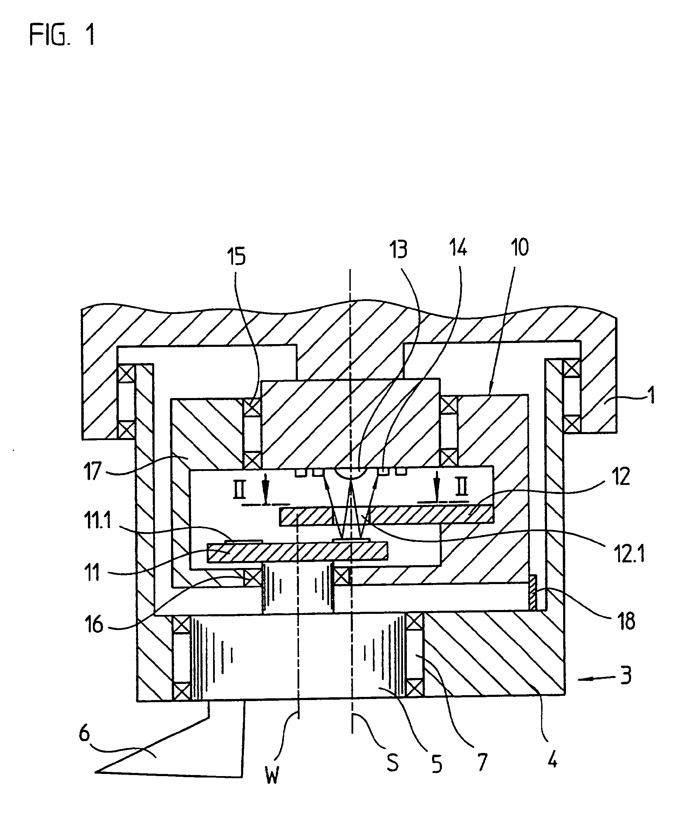

In den Figuren 1 bis 5 ist ein erstes Beispiel einer Spindelanordnung mit einer darin integrierten Winkelmeßeinrichtung 10 im Prinzip dargestellt. Sie besteht aus einem stationären Maschinenteil 1, in dem ein Werkzeugkopf 3 zentrisch zur Spindelachse S verdrehbar gelagert ist.

In nicht gezeigter Weise kann der Werkzeugkopf 3 auch drehstarr in einem Spindelkörper befestigt sein, der wiederum im Maschinenteil 1 verdrehbar gelagert ist.

Der Werkzeugkopf 3 besteht aus einem Grundkörper 4 und einem darin um die Achse W verdrehbar gelagerten Werkzeugträger 5. Die Drehachse W verläuft parallel zur Spindelachse S, ist aber radial gegen diese versetzt. Zur Bearbeitung eines nicht dargestellten Werkstücks trägt der Werkzeugträger 5 ein Schneidwerkzeug 6, dessen radialer Abstand zur Spindelachse S durch Verdrehen des Werkzeugträgers 5 in der exzentrischen Bohrung 7 des Grundkörpers 4 einstellbar ist. Derartige Spindelanordnungen sind beispielsweise in der DE 22 43 734 A und der DE 21 26 164 A erläutert. Sie dienen zum Plandrehen, zum Ausdrehen von Bohrungen und insbesondere zur Bearbeitung von Werkstücken mit einer von der Kreisform abweichenden Außen- oder Innenkontur, beispielsweise einer polygonalen Oberfläche.

In allen Fällen ist es vorteilhaft, die momentane Lage des Werkzeugs 6 gegenüber der Spindelachse S zu detektieren, so daß eine numerisch gesteuerte Einstellung der Werkzeuglage ermöglicht wird. Hierzu ist gemäß der Erfindung eine Winkelmeßeinrichtung 10 vorgesehen, die aus einem Teilungsträger 11, einer Abtastplatte 12, einer Lichtquelle 13 und einer Detektoranordnung 14 besteht.

Zur numerisch gesteuerten Verstellung des Werkzeugs 6 kann die mit der Winkelmeßeinrichtung 10 erfaßte Drehlage in einen Radiuswert transformiert werden.

Bei der in Figur 1 dargestellten Ausführung ist die Winkelmeßeinrichtung 10 eine eigene vormontierte Baueinheit mit eigenen Lagern 15 und 16 zur Lagerung des Teilungsträgers 11 und der Detektoranordnung 14 relativ zum Gehäuse 17. Das Gehäuse 17 ist drehstarr am Grundkörper 4 befestigt, beispielsweise über eine Drehmomentenstütze 18, die einen radialen und axialen Ausgleich ermöglicht. Bei den weiteren Ausführungsbeispielen besitzt die Winkelmeßeinrichtung 10 keine eigene Lagerungen 15, 16.

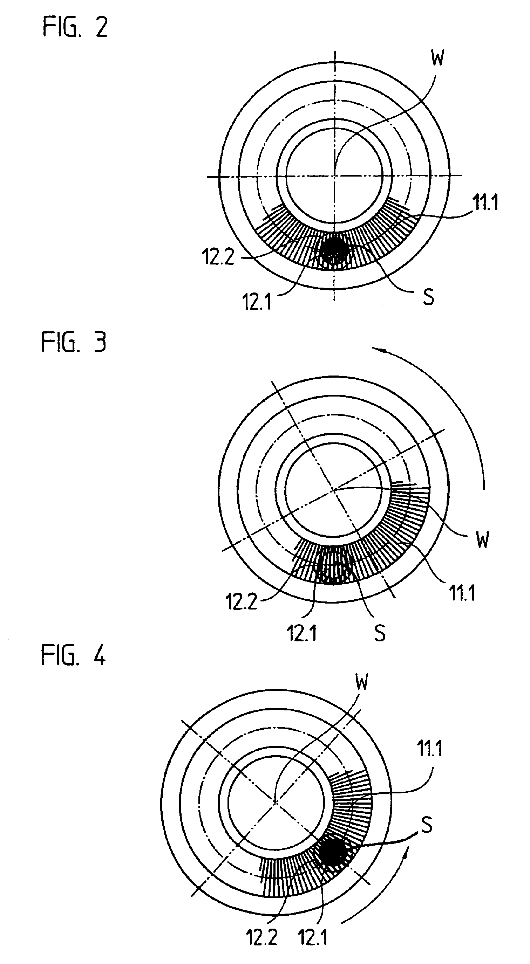

Der Teilungsträger 11 weist eine inkrementale, lichtelektrisch abtastbare Radialteilung 11.1 auf. Dieser Radialteilung 11.1 besteht aus in Drehrichtung abwechselnd angeordneten reflektierenden und nicht reflektierenden Teilstrichen, auch Amplitudenteilung genannt oder nur aus reflektierenden Teilstrichen, wobei abwechselnd angeordnete Teilstriche die Phase eines einfallenden Lichtstrahls unterschiedlich beeinflussen (Phasenteilung). Der Teilungsträger 11 ist am Werkzeugträger 5 derart drehstarr befestigt, daß das Zentrum der Radialteilung 11.1 mit der Werkzeugträgerachse W zusammenfällt. Die Teilstriche verlaufen sternförmig von dieser Werkzeugträgerachse W ausgehend. Dieser Verlauf ist in der Draufsicht II-II gemäß Figur 2 verdeutlicht.

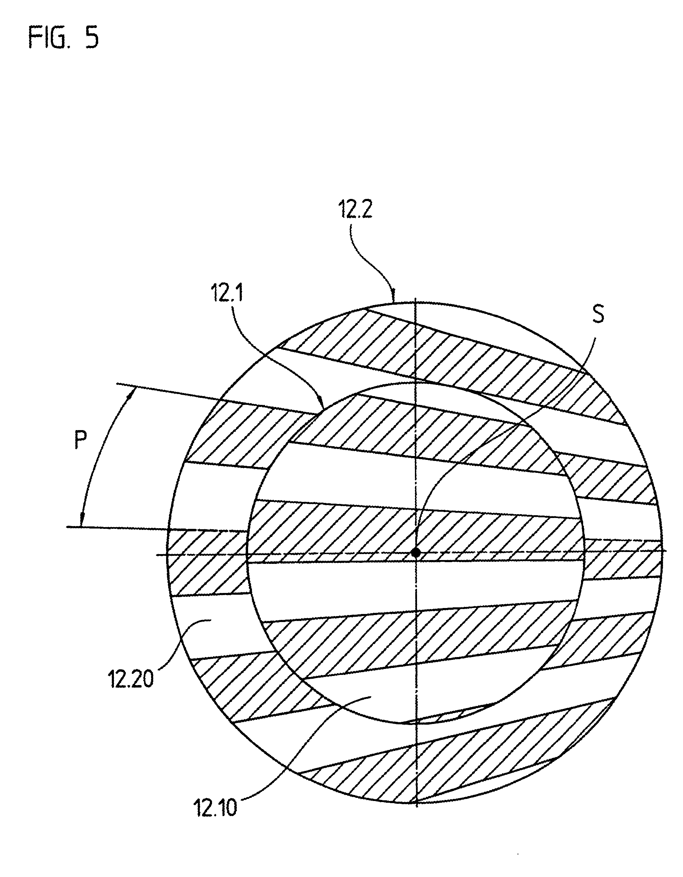

Die Abtastplatte 12 ist drehstarr am Grundkörper 4 befestigt. Zur Erzeugung mehrerer gegeneinander phasenverschobener Abtastsignale weist die Abtastplatte 12 mehrere Abtastfelder 12.1 und 12.2 auf. Jedes Abtastfeld 12.1 und 12.2 weist eine Abtastteilung 12.10 und 12.20 in Form einer Radialteilung auf, dessen Teilstriche zur Werkzeugträgerachse W als Zentrum ausgerichtet sind (Figur 5).

Die Abtastung des Teilungsträgers 11 erfolgt mittels einer Abtasteinheit, bestehend aus der Lichtquelle 13 und der Detektoranordnung 14. Die Abtasteinheit 13, 14 ist drehstarr am stationären Maschinenteil 1 befestigt. Bei einer Verdrehung des Werkzeugträgers 5 um die Werkzeugträgerachse W innerhalb des Werkzeugkopfes 3 wird das Licht der Lichtquelle 13 durch die Relativbewegung zwischen der Radialteilung 11.1 des Teilungsträgers 11 und den Abtastteilungen 12.10, 12.20 der Abtastfelder 12.1, 12.2 positionsabhängig moduliert und von der Detektoranordnung 14 erfaßt und in elektrische Abtastsignale gewandelt.

Die Abtastfelder 12.1, 12.2 der Abtastplatte 12 sind derart angeordnet, daß bei jeder Drehlage des Grundkörpers 4 relativ zum stationären Maschinenteil 1 eine Überlagerung der Abtastfelder 12.1, 12.2 mit der Radialteilung 11.1 vorhanden ist. Jedes der Abtastfelder 12.1, 12.2 besitzt einen ringförmigen Bereich, dessen Zentrum die Spindelachse S ist. Die Striche der Radialteilung 12.10, 12.20 in diesen ringförmigen Bereichen weisen zur Werkzeugträgerachse W hin.

Gemäß den Figuren 1 bis 5 ist die Detektoranordnung 14 im Bereich der Spindelachse S angeordnet. Die Abtastfelder 12.1, 12.2 verlaufen ringförmig um die Spindelachse S, wobei der innerste Ring zu einem punktförmigen Kreis wird. Die Abtastteilungen 12.10, 12.20 sind in bekannter Weise gegeneinander versetzt (Figur 5). Anstelle von zwei Abtastköpfen 12.1, 12.2 sind in der Praxis üblicherweise vier Abtastfelder vorgesehen, deren Abtastteilungen jeweils um 90°, bzw. um ¼ der Teilungsperiode P gegeneinander versetzt sind. Aus Gründen der Übersichtlichkeit sind nur zwei Abtastfelder 12.1, 12.2 dargestellt.

Die Detektoranordnung 14 weist für jedes Abtastfeld 12.1, 12.2 zumindest eine lichtempfindliche Fläche auf. Um eine Modulation des Lichts der Lichtquelle 13 bei einer Verdrehung des Werkzeugkopfes 3 um die Spindelachse S bei mitdrehendem Werkzeugträger 5 zu vermeiden, ist es vorteilhaft, wenn die lichtempfindliche Fläche, die einem Abtastfeld 12.1 bzw. 12.2 zugeordnet ist, ihren Flächenschwerpunkt in der Spindelachse S hat. Dabei kann jede der Flächen ein konzentrisch zur Spindelachse S angeordneter Ring sein oder aus mehreren Einzelflächen bestehen, die konzentrisch um die Spindelachse S angeordnet sind. Durch diese Maßnahme werden Teilungsfehler der Radialteilung 11.1 und 12.10, 12.20 über einen großen Abtastbereich der Abtastfelder 12.1, 12.2 gemittelt.

In Figur 4 ist eine verdrehte Stellung des Werkzeugkopfs 3 um die Spindelachse S dargestellt. Gegenüber der Figur 2 hat sich der Werkzeugkopf 3 mit dem Werkzeugträger 5 um etwa 48° gedreht.

In dem Beispiel gemäß den Figuren 1 bis 5 wird die positionsabhängige Modulation des Lichts der Lichtquelle 13 dadurch erzeugt, daß die Radialteilung 11.1 des Teilungsträgers 11 positionsabhängig Licht reflektiert bzw. absorbiert und die Abtastteilungen 12.10, 12.20 aus abwechselnd opaken und transparenten Teilstrichen bestehen.

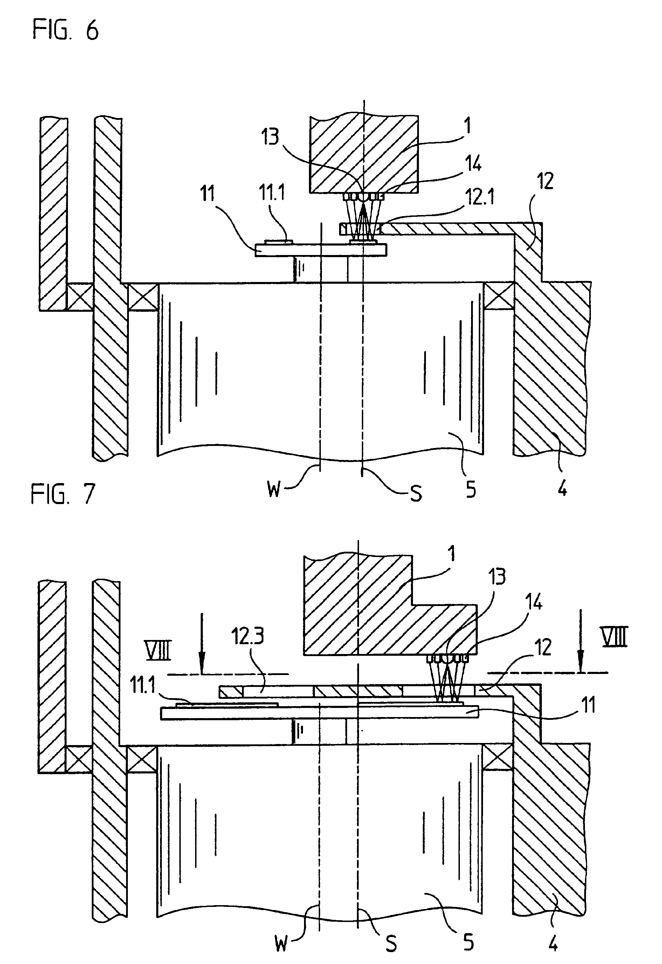

Alternativ dazu kann die Radialteilung 11.1 aus abwechselnd opaken und transparenten Teilstrichen und die Abtastteilungen 12.10, 12.20 aus abwechselnd reflektierenden und absorbierenden Bereichen bestehen. Diese Anordnung ist schematisch in Figur 6 dargestellt.

Die Anordnungen der Figuren 1 bis 6 haben den Vorteil einer kompakten Abtastplatte 12 und sind besonders für große Abstände zwischen den beiden Achsen S und W geeignet, da der Durchmesser des Teilungsträgers 11 etwa 2 mal der Exzentrizität ist und sich bei großen Durchmessern die Auflösung der Winkelmessung erhöht und die Meßfehler verringern.

Bei relativ kleinen Exzentrizitäten ist die Detektoranordnung von der Spindelachse S entfernt angeordnet, wie anhand der Figuren 7 bis 11 erläutert wird. Die Spindelanordnung entspricht den vorhergehenden Beispielen. Der Teilungsträger 11 ist wiederum am Werkzeugträger 5 befestigt und die Abtastplatte 12 am Grundkörper 4. Die Radialteilungen 11.1 des Teilungsträgers 11 und des Abtastfelds 12.3 verlaufen wiederum sternförmig zur Werkzeugträgerachse W als gemeinsames Zentrum. Das Abtastfeld 12.3 verläuft wiederum ringförmig konzentrisch um die Spindelachse S und die Detektoranordnung 14 ist drehstarr am stationären Maschinenteil 1 befestigt. Die Teilungsstriche der Radialteilung 11.1 sind mindestens so lang wie der radiale Abstand der beiden Wellen S und W. Dabei ist die Länge die Ausdehnung in Richtung der Werkzeugträgerachse W.

Die lichtempfindliche Fläche der Detektoranordnung 14, welche dem Abtastfeld 12.3 zugeordnet ist, erfaßt - wie bei den Figuren 1 bis 6 - eine Vielzahl von Teilungsperioden der Radialteilung 11.1 und 12.30, so daß eine Mittelung von Teilungsfehlern resultiert und das Abtastsignal nur durch die Relativdrehung zwischen dem Werkzeugträger 5 und dem Grundkörper 4 moduliert wird und von der Relativdrehung zwischen Grundkörper 4 und stationärem Maschinenteil 1 zumindest weitgehend unbeeinflußt bleibt.

In nicht gezeigter Weise ist es wiederum vorteilhaft, wenn der Flächenschwerpunkt der lichtempfindlichen Fläche bzw. der lichtempfindlichen Flächen eines Abtastfelds 12.3 in der Spindelachse S liegt. Dadurch wird eine gute Mittelung der Strichbreiten der Radialteilung 11.1 und der Abtastteilung 12.30 erreicht.

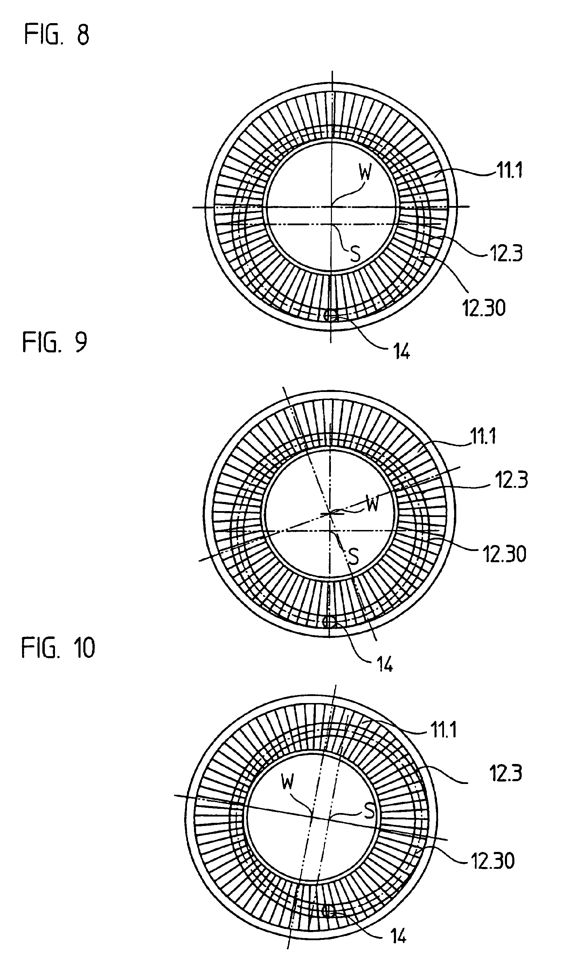

Eine Verdrehung des Werkzeugträgers 5 gegenüber dem Grundkörper 4 ist in Figur 9 dargestellt. Es erfolgt eine Modulation des Lichtflusses durch den Teilungsträger 11 und der Abtastplatte 12.

Dagegen resultiert aus einer Verdrehung des Grundkörpers 4 um die Spindelachse S (Figur 10) keine Modulation, bzw. die durch die Relativdrehung zwischen dem Werkzeugträger 5 und dem Grundkörper 4 erzeugte Modulation bleibt zumindest weitgehend unbeeinflußt.

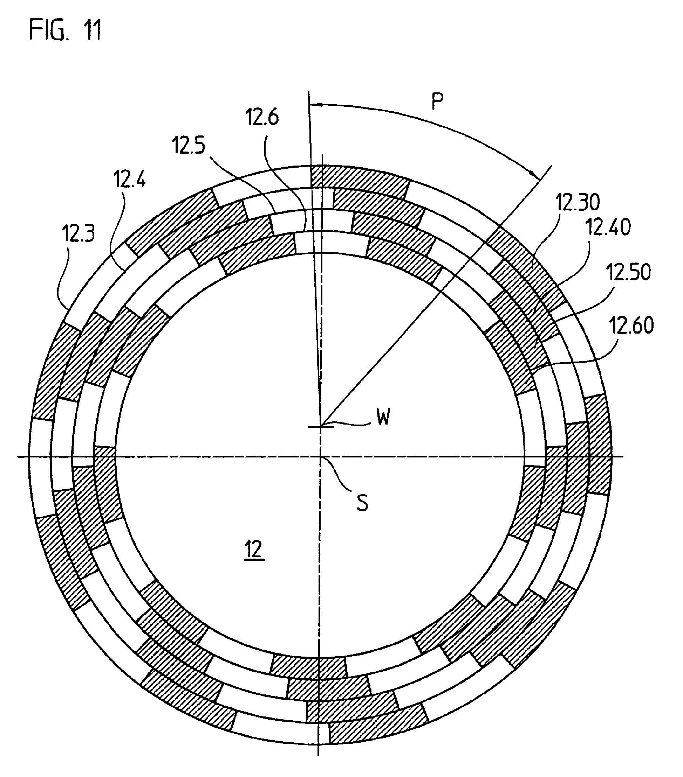

In Figur 11 ist eine Abtastplatte mit vier Abtastfeldern 12.3, 12.4, 12.5, 12.6 dargestellt. Die Abtastteilungen 12.30, 12.40, 12.50, 12.60 sind jeweils um ¼ der Teilungsperiode P gegeneinander versetzt. Jede Teilungsperiode P besteht aus einem opaken (schraffiert dargestellt) und einem transparenten Bereich.

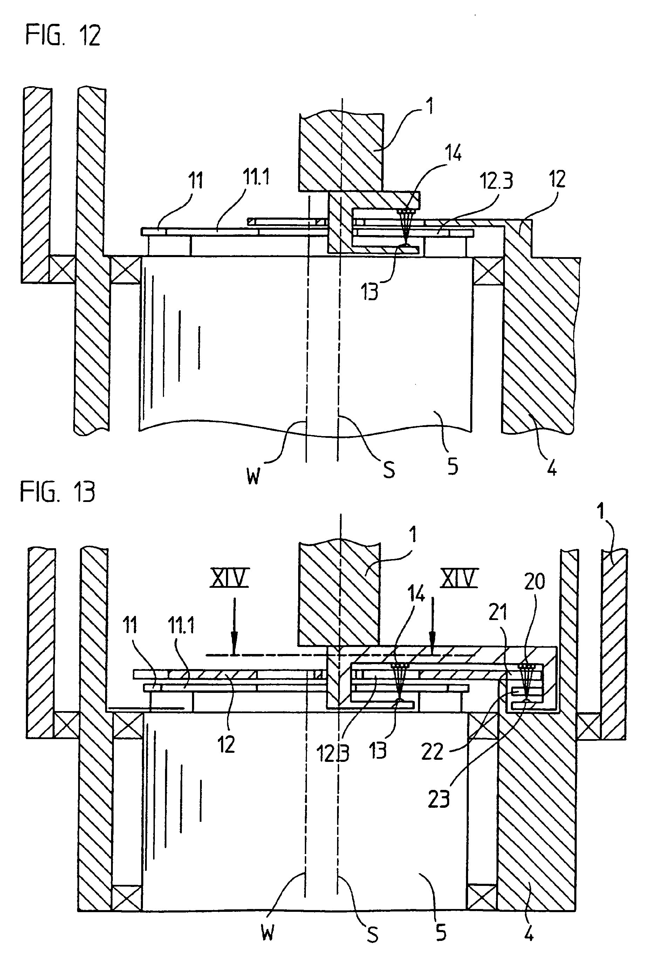

In Figur 12 ist eine sogenannte Durchlichtversion der Winkelmeßeinrichtung dargestellt. Dabei befindet sich die Lichtquelle 13 auf einer Seite des Teilungsträgers 11 und die Detektoranordnung 14 auf der anderen Seite. Die Radialteilungen 11.1 und 12.30 werden vom Licht jeweils durchstrahlt und bestehen daher jeweils aus abwechselnd opaken und transparenten Bereichen.

Zur Bearbeitung von Werkstücken mit einer von der Kreisform abweichenden Außen- oder Innenkontur, insbesondere von polygonartigen Oberflächen wird bei der beschriebenen Spindelanordnung der Werkzeugträger 5 in Abhängigkeit von der momentanen Drehlage des Grundkörpers 4 im stationären Maschinenteil 1 verdreht. Die Drehbewegung um die Achse W wird in Abhängigkeit der Drehlage des Grundkörpers 4 um die Achse S numerisch gesteuert. Derartige Spindelanordnungen werden auch als Werkstückträger verwendet. Anstelle des Werkzeugs 6 wird ein Werkstück daran befestigt und beispielsweise numerisch gesteuert zu einem Dreh- oder Fräswerkzeug bewegt. Eine derartige Anordnung ist in der DE 17 52 236 A beschrieben.

Um die Winkelmeßeinrichtung auch für diese Anforderungen auszubilden, ist gemäß Figur 13 am stationären Maschinenteil 1 eine weitere Detektoranordnung 20 vorgesehen. An der Abtastplatte 12 ist eine zweite Radialteilung 21 konzentrisch zur Spindelachse S vorgesehen. Die Teilstriche der Radialteilung 21 sind zum Zentrum S gerichtet. Zur Abtastung der Radialteilung 21 ist am stationären Maschinenteil 1 eine an sich bekannte Abtastteilung 22 angebracht. Zur Beleuchtung der Radialteilung 21, der Abtastteilung 22 und der Detektoranordnung 20 kann die Lichtquelle 13 oder eine eigene Lichtquelle 23 vorgesehen sein.

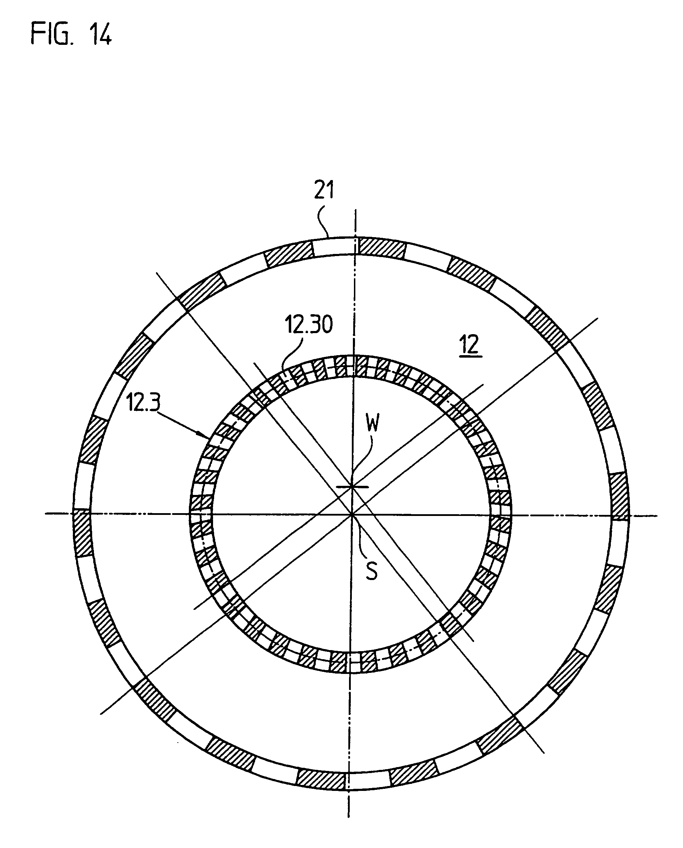

Die Abtastplatte 12 mit den Radialteilungen 12.30 und 21 ist in Figur 14 in Draufsicht dargestellt.

Die Abtastteilung 22 kann mit der Detektoranordnung 20 eine gemeinsame Einheit bilden, dabei können die lichtempfindlichen Flächen auch als Abtastteilung 22 ausgeführt sein. Darüber hinaus ist die Abtastanordnung 20, 22 nicht auf das lichtelektrische Prinzip beschränkt, die Radialteilung 21 kann auch induktiv, kapazitiv oder magnetisch abtastbar ausgebildet sein.

Die Radialteilungen 11.1, 12.10, 12.20, 12.30, 12.40, 12.50, 12.60 und 21 können in der Teilungsperiode bzw. in ihrer Winkelausrichtung so ausgebildet werden, daß bekannte Vernier- bzw. Moiré-Abtastprinzipien eingesetzt werden können.

Die Lichtquelle 13 kann alternativ auch im Grundkörper 4 angeordnet sein und die Versorgung der Lichtquelle über eine im Grundkörper 4 integrierte Batterie erfolgen oder über Spulen oder Schleifringübertrager vom stationären Maschinenteil 1 in den Grundkörper 4 eingekoppelt werden.
Die Radialteilungen 11.1, 21 können inkremental oder absolut codiert, einspurig oder mehrspurig ausgebildet sein.

Der Teilungsträger 11 kann auch ein Segment mit einer Radialteilung 11.1 von kleiner als 360° aufweisen.

## Patentansprüche

1. Winkelmeßeinrichtung mit einem Teilungsträger (11), einer Abtastplatte (12) und einer Detektoranordnung (14) an einem stationären Teil (1) zur Messung der Drehlage des Teilungsträgers (11) gegenüber der Abtastplatte (12) um eine erste Drehachse (W), **dadurch gekennzeichnet, daß**
- die Abtastplatte (12) mit dem Teilungsträger (11) um eine zweite Drehachse (S) relativ zur Detektoranordnung (14) drehbar ist, und
- die beiden Drehachsen (S, W) parallel zueinander verlaufen und radial voneinander beabstandet sind.

2. Winkelmeßeinrichtung nach Anspruch 1, **dadurch gekennzeichnet, daß** die Abtastplatte (12) zumindest ein Abtastfeld (12.1 bis 12.6) aufweist, das konzentrisch zur zweiten Drehachse (S) verläuft.

3. Winkelmeßeinrichtung nach Anspruch 1 oder 2, **dadurch gekennzeichnet, daß** der Teilungsträger (11) und die Abtastplatte (12) jeweils eine Radialteilung (11.1, 12.10 bis 12.60) aufweisen, dessen Teilungsstriche gemeinsam zur ersten Drehachse (W) ausgerichtet sind.

4. Winkelmeßeinrichtung nach einem der vorhergehenden Ansprüche, **dadurch gekennzeichnet, daß** die Detektoranordnung (14) im Bereich der zweiten Drehachse (S) angeordnet ist und das zumindest eine Abtastfeld (12.1, 12.2) kreisförmig um die zweite Drehachse (S) angeordnet ist und der Durchmesser des Kreisrings kleiner oder gleich der Länge der Teilstriche der Radialteilung (11.1) des Teilungsträgers (11) ist.

5. Winkelmeßeinrichtung nach einem der Ansprüche 1 bis 4, **dadurch gekennzeichnet, daß** die Detektoranordnung (14) von der zweiten Drehachse (5) einen radialen Abstand aufweist, der größer ist als der radiale Abstand der beiden Drehachsen (S, W), und daß das zumindest eine Abtastfeld (12.3, 12.4, 12.5, 12.6) einen konzentrisch zur zweiten Drehachse (S) verlaufenden Kreisring bildet, der beide Drehachsen (S, W) einschließt.

6. Winkelmeßeinrichtung nach einem der vorhergehenden Ansprüche, **dadurch gekennzeichnet, daß** der Teilungsträger (11) lichtelektrisch abtastbar ist, und daß die Detektoranordnung (20) eine lichtempfindliche Fläche oder Flächen aufweist, die dem zumindest einen Abtastfeld (12.1 bis 12.6) zugeordnet ist, und daß der Flächenschwerpunkt dieser Fläche oder Flächen in der zweiten Drehachse (S) liegt.

7. Winkelmeßeinrichtung nach einem der vorhergehenden Ansprüche, **dadurch gekennzeichnet, daß** die Abtastplatte (12) eine Teilung (21) aufweist, die von einer weiteren Detektoranordnung (20) des stationären Teils (1) zur Erfassung der Drehlage der Abtastplatte (12) relativ zum stationären Teil (1) abtastbar ist.

8. Winkelmeßeinrichtung nach Anspruch 7, **dadurch gekennzeichnet, daß** die Abtastplatte (12) eine Radialteilung (21) aufweist, deren Teilstriche zur zweiten Drehachse (S) ausgerichtet sind.

9. Spindelanordnung mit einem stationären Maschinenteil (1), in dem ein Grundkörper (4) um eine Spindelachse (S) drehbar gelagert ist und im Grundkörper (4) ein Werkzeug- oder Werkstückträger (5) um eine Trägerachse (W) drehbar gelagert ist, wobei beide Drehachsen (S, W) parallel zueinander verlaufen und radial voneinander beabstandet sind, **dadurch gekennzeichnet, daß** am stationären Maschinenteil (1) eine Detektoranordnung (14), am Grundkörper (4) eine Abtastplatte (12) und am Werkzeug- oder Werkstückträger (5) ein Teilungsträger (11) einer Winkelmeßeinrichtung (10) nach einem der vorhergehenden Ansprüche angeordnet ist.

## Claims

1. Angle measuring device with a graduation carrier (11), a scanning plate (12) and a detector arrangement (14) on a stationary part (1) for measuring the rotational position of the graduation carrier (11) relative to the scanning plate (12) around a first rotational axis (W), **characterised in that**
• the scanning plate (12) with the graduation carrier (11) is rotatable relative to the detector arrangement (14) around a second rotational axis (S) and
• the two rotational axes (S, W) run parallel to one another and are spaced radially from one another.

2. Angle measuring device according to claim 1, **characterised in that** the scanning plate (12) has at least one scanning field (12.1 to 12.6), which runs concentrically to the second rotational axis (S).

3. Angle measuring device according to claim 1 or 2, **characterised in that** the graduation carrier (11) and the scanning plate (12) respectively have a radial graduation (11.1, 12.10 to 12.60), the graduation marks of which are jointly oriented to the first rotational axis (W).

4. Angle measuring device according to one of the preceding claims, **characterised in that** the detector arrangement (14) is arranged in the region of the second rotational axis (S), and that at least one scanning field (12.1, 12.2) is arranged in a circular shape around the second rotational axis (S) and the diameter of the circular ring is smaller than or equal to the length of the component marks of the radial graduation (11.1) of the graduation carrier (11).

5. Angle measuring device according to one of claims 1 to 4, **characterised in that** the detector arrangement (14) has a radial distance from the second rotational axis (5?), which is greater than the radial spacing of the two rotational axes (S, W), and that the at least one scanning field (12.3, 12.4, 12.5, 12.6) forms a circular ring running concentrically to the second rotational axis (S) enclosing both rotational axes (S, W).

6. Angle measuring device according to one of the preceding claims, **characterised in that** the graduation carrier (11) is photoelectrically scannable, and that the detector arrangement (20) has a light-sensitive surface or surfaces associated with the at least one scanning field (12.1 to 12.6), and that the centre of gravity of this surface or surfaces lies in the second rotational axis (S).

7. Angle measuring device according to one of the preceding claims, **characterised in that** the scanning plate (12) has a graduation (21), which is scannable by a further detector arrangement (20) of the stationary part (1) to detect the rotational position of the scanning plate (12) relative to the stationary part (1).

8. Angle measuring device according to claim 7, **characterised in that** the scanning plate (12) has a radial graduation (21), the component marks of which are oriented to the second rotational axis (S).

9. Spindle arrangement with a stationary machine part (1), in which a base body (4) is rotatably disposed around a spindle axis (S) and a tool or workpiece support (5) is disposed in the base body (4) to be rotatable around a support axis (W), wherein the two rotational axes (S, W) run parallel to one another and are spaced radially from one another, **characterised in that** a detector arrangement (14) is arranged on the stationary machine part (1), a scanning plate (12) is arranged on the base body (4) and a graduation carrier (11) of an angle measuring device (10) according to one of the preceding claims is arranged on the tool or workpiece support (5).

## Revendications

1. Dispositif de mesure d'angle comprenant un support de graduation (11), une plaque d'exploration (12) et un dispositif de détection (14) sur une partie fixe (1), pour mesurer la position de rotation du support de graduation (11) par rapport à la plaque d'exploration (12) autour d'un premier axe de rotation (W), **caractérisé en ce que** la plaque d'exploration (12) avec le support de graduation (11) peut tourner par rapport au dispositif de détection autour d'un second axe de rotation (S), les deux axes (S, W) étant parallèles entre eux et espacés l'un de l'autre.

2. Dispositif de mesure d'angle selon la revendication 1, **caractérisé en ce que** la plaque d'exploration (12) présente au moins un champ d'exploration (12.1 à 12.6) qui est concentrique au second axe de rotation (S).

3. Dispositif de mesure d'angle selon la revendication 1 ou 2, **caractérisé en ce que** le support de graduation (11) et la plaque d'exploration (12) portent chacun une graduation radiale (11.1, 12.10 à 12.60) dont les traits sont dirigés vers le premier axe de rotation (W).

4. Dispositif de mesure d'angle selon une des revendications précédentes, **caractérisé en ce que** le dispositif de détection (14) est disposé dans la zone du second axe de rotation (S), et au moins un champ d'exploration (12.1, 12.2) est disposé en cercle autour de ce second axe de rotation (S), avec un diamètre de l'anneau circulaire qui est inférieur ou égal à la longueur des traits radiaux (11.1) du support de graduation (11).

5. Dispositif de mesure d'angle selon une des revendications 1 à 4, **caractérisé en ce que** le dispositif de détection (11) est espacé du second axe de rotation (S) d'une distance radiale qui est supérieure à la distance radiale des deux axes de rotation (S, W), au moins un champ d'exploration (12.3, 12.4, 12.5, 12.6) formant un anneau circulaire qui est concentrique au second axe de rotation (S) et qui inclut les deux axes de rotation (S, W).

6. Dispositif de mesure d'angle selon une des revendications précédentes, **caractérisé en ce que** le support de graduation (11) peut être exploré au moyen de lumière électrique, le dispositif de détection (20) présentant une ou plusieurs surface(s) sensible(s) à la lumière qui est (sont) associée(s) à au moins un champ d'exploration (12.1 à 12.6) et dont le centre de gravité se trouve sur le second axe de rotation (S).

7. Dispositif de mesure d'angle selon une des revendications précédentes, **caractérisé en ce que** la plaque d'exploration (12) présente une graduation (21) qui peut être explorée par un autre dispositif de détection (20) de la partie stationnaire (1) servant à saisir la position de rotation de la plaque d'exploration (12) par rapport à la partie stationnaire (1).

8. Dispositif de mesure d'angle selon la revendication 7, **caractérisé en ce que** la plaque d'exploration (12) présente une graduation radiale (21), dont les traits sont dirigés vers le second axe de rotation (S).

9. Système à broche comprenant une partie de machine (1) stationnaire dans laquelle peut tourner autour d'un axe de broche (S) un corps de base (4) avec monté en rotation dans ce corps autour d'un axe de support (W), un support de pièce ou d'outil (5), les deux axes (S, W) étant parallèles entre eux et espacés l'un de l'autre, **caractérisé en ce que** sont montés sur la partie de machine (1) un dispositif de détection, sur le corps de base (4) une plaque d'exploration (12) et sur le support de pièce ou d'outil (5) un support de graduation (11) d'un dispositif de mesure d'angle (10) selon une des revendications précédentes.
